# DEMANDE DE BREVET EUROPEEN

(11) **EP 1 525 948 A1**
(43) Date de publication de la demande: **27.04.2005**
(21) Numéro de dépôt: 04025157.1
(22) Date de dépôt: 22.10.2004
(51) Int. Cl.: B24C 1/04, E04B 5/46

(54) **Procédé de réalisation d'une dalle de verre à glissance réduite et dalle obtenue selon ce procédé**

(30) Priorité: 24.10.2003 FR 0312482
(71) Demandeur: COMPTOIR DE PROMOTION DU VERRE "COPROVER", 81100 Castres (FR)
(72) Inventeur: Mas, Gérard, 81100 Castres (FR); Philippou, Didier, 81290 Labruguière (FR)
(74) Mandataire: Richebourg, Michel François

(57) **Abrégé**

L'invention concerne un procédé de fabrication d'une dalle ou panneau de verre (D) ou matériau équivalent, remarquable en ce qu'il consiste à réaliser par enlèvement de matière, des formes en saillie (300) sur la surface de la dalle (D).

L'invention concerne également la dalle (D) de verre obtenue selon ce procédé qui présente une glissance réduite et une transparence pérennisée.

Applications : Fabrication de dalle et panneau de verre ou matériau équivalent pour plancher et marches d'escalier.

## Description

### DOMAINE D'APPLICATION DE L'INVENTION

La présente invention a trait au domaine des dalles, planchers ou marches d'escalier en verre ou équivalents et notamment aux adaptations permettant de réaliser une surface transparente à glissance réduite.

### DESCRIPTION DE L'ART ANTÉRIEUR

Aujourd'hui, le verre est parfaitement susceptible de fournir le matériau de base à des planchers, à des marches d'escaliers ou à des dalles.

Les panneaux de verre ont néanmoins pour désavantage d'offrir une grande glissance et notamment lorsque soumis à un environnement extérieur, ils présentent une surface humide augmentant les risques de dérapage.

Il existe dans l'art antérieur des panneaux de verre ou glaces trempées à glissance réduite présentant une face recouverte d'un revêtement à glissance réduite. La difficulté dans ce type de glace consiste à conserver la transparence du verre tout en réduisant la glissance, cette réduction devant être conservée dans le temps.

Il existe par exemple, la dalle de verre antidérapante décrite dans le document brevet français n°2748268 et qui, constituée par un panneau de verre présentant sur au moins certaines parties de sa surface, une rugosité accrue, est remarquable en ce que ces parties sont munies d'un revêtement à base d'une frite de verre choisie pour que sa température de ramollissement soit inférieure à la température de traitement thermique du panneau et pour que sa température de fusion soit supérieure à ladite température de traitement thermique.

Cette dalle de verre présente donc des arêtes vives de faible hauteur qui sont susceptibles d'être émoussées par l'usure ou du fait du remplissage des anfractuosités présentes dans les parties à forte rugosité par des algues ou autres organismes naturels telles les mousses. Il est en outre très difficile de garder une dalle parfaitement transparente lorsque des parties à rugosité plus importante sont ménagées par insertion d'un matériau différent. De plus, la pérennisation de la transparence est difficilement compatible avec le remplissage quasi systématique des anfractuosités d'une dalle au sol par des micro-organismes végétaux qui non seulement augmentent la glissance mais diminuent également la transparence.

Un autre inconvénient des dalles de verre antidérapantes fabriquées par insertion de frites de verre, réside dans la lourdeur du procédé de fabrication qui nécessite la maîtrise de la fabrication du produit dès le début de la chaîne de fabrication et exige donc pour être mis en oeuvre de façon rentable, de grandes quantités.

Il existe dans l'art antérieur d'autres moyens de rendre antidérapante une dalle de verre mais le respect de la transparence et la recherche d'un moyen de renforcer la rugosité susceptible d'être beaucoup moins soumis à l'usure, ont longtemps été considérés comme des critères de conception antagonistes.

### BRÈVE DESCRIPTION DE L'INVENTION

Partant de cet état de fait, la demanderesse a mené des recherches ayant pour objectif de remédier aux inconvénients de l'art antérieur en proposant une dalle ou tout élément de plancher de verre ou matériau équivalent présentant d'une part une surface antidérapante beaucoup moins soumise à l'usure que celles proposées dans l'art antérieur et d'autre part une transparence pérennisée.

Ces recherches ont abouti à la conception d'un procédé de fabrication d'une dalle ou d'un panneau de verre ou matériau équivalent remarquable en ce qu'il consiste à réaliser par enlèvement de matière au moins une forme en saillie sur la surface de la dalle.

Cette caractéristique qui a pour fonction de réduire la glissance de la dalle ou du panneau est particulièrement avantageuse en ce qu'elle assure une réalisation d'une surface antidérapante adaptée au besoin de l'utilisateur. De plus, il est parfaitement possible de mettre en oeuvre ce procédé sans obligatoirement maîtriser toute la fabrication de la dalle en verre.

L'enlèvement de matière apporte une grande souplesse dans le choix de la profondeur de l'opération d'enlèvement et donc dans le choix de la hauteur de la ou des formes en saillie. Cette profondeur permet de rendre impossible un total remplissage par micro-organismes comme il pouvait se rencontrer dans l'art antérieur.

Ainsi, contrairement aux procédés et dalles de l'art antérieur qui prévoient soit d'insérer des frites de verre soit d'apposer des bandes antidérapantes, le procédé de l'invention se contente d'enlever de la matière déjà existante. Ce procédé permet donc de respecter les caractéristiques de couleurs et de transparence de la dalle travaillée. En effet, l'absence d'ajout ou d'apposition de matière supplémentaire évite les problèmes rencontrés dans l'art antérieur.

Bien entendu, une opération d'enlèvement de matière définit sur les surfaces travaillées un état de surface particulier qui peut aller à l'encontre du respect de la transparence.

Ainsi, selon une caractéristique particulièrement avantageuse de l'invention, le procédé est remarquable en ce que ledit enlèvement de matière est réalisé par une opération de sablage projetant un jet de matériaux abrasifs.

Ce choix de moyen d'enlèvement de matière est particulièrement judicieux en ce qu'il constitue un procédé souple et maîtrisé dans le domaine du verre et qui peut être utilisé sur de petites quantités sur des dalles de verres déjà finalisées. Un tel procédé est classiquement utilisé soit pour réaliser des surfaces dépolies à des fins esthétiques soit pour réaliser des surfaces rugueuses pour rendre antidérapantes la surface de travail. L'utilisation de ce procédé dans le cadre de l'invention diffère de ces exploitations précédentes en ce que la dalle de verre ou la surface de verre est rendue antidérapante par réalisation de formes en saillie. Aussi, les surfaces sablées ne servent pas directement à l'appui de la chaussure mais à la mise en saillie des formes non sablées. Ainsi, le sablage est utilisé de façon nouvelle dans le cadre de l'invention.

L'utilisation de ce procédé constitue également une nouveauté en ce qu'il est classiquement utilisé pour dépolir le verre. Or, un des objectifs de l'invention est de fournir une dalle de verre antidérapante et transparente.

Cet objectif est atteint par le procédé de l'invention, malgré l'utilisation d'un procédé de réalisation ayant classiquement pour effet de dépolir le verre, car il comporte une opération finale de vernissage qui remplit les anfractuosités créées par l'enlèvement de matière donc par le sablage sur la surface en retrait créée par l'enlèvement de matière et rend la transparence aux surfaces dépolies.

Le remplissage a non seulement pour effet de rendre la transparence aux surfaces dépolies et de pérenniser cette transparence mais a également pour avantage d'éviter le remplissage des mêmes anfractuosités par des micro-organismes végétaux garantissant ainsi la propreté à long terme de la dalle obtenue par le procédé de l'invention.

Cette opération n'est possible sans augmenter la glissance que dans le cadre du procédé de l'invention, qui met en saillie des formes par sablage. En effet, les anfractuosités remplies par le vernis n'ont pas de fonction et leur remplissage n'influe pas sur la glissance de la dalle, car les surfaces sablées résultant de l'enlèvement de matière, sont en retrait par rapport aux formes en saillie non sablées.

Ces formes n'ont pas été sablées et sont donc en saillie une fois l'opération de sablage terminée, par une caractéristique du procédé de l'invention, qui est remarquable en ce qu'un cache est placé sur la surface de la dalle ou panneau à travailler avant l'opération de sablage afin de former un obstacle à la projection abrasive et de créer ainsi des formes en saillie.

La technique du cache est bien entendu connue dans le cadre d'un procédé de sablage classique. Il a néanmoins dans le cadre du procédé de l'invention, la fonction spécifique de déterminer la surface et le volume des parties de la dalle de verre qui resteront en saillie, une fois l'opération de sablage terminée.

Ce procédé est donc particulièrement original en ce qu'il consiste à utiliser une technique de dépolissage pour finalement obtenir un produit transparent.

L'invention concerne également la dalle de verre obtenue selon le procédé de l'invention ci-dessus décrit et qui est remarquable en ce qu'elle présente sur sa surface supérieure au moins une forme an saillie. Ses caractéristiques et ses avantages seront développés ci-après.

En effet, les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, qui donnent à titre d'exemple non limitatif, un mode de réalisation d'un procédé de fabrication d'un panneau de verre et d'une dalle de verre obtenue selon ce procédé, conformes à l'invention.

### BRÈVE DESCRIPTION DES DESSINS

Les figures la, 1b, 1c et 1d sont des dessins schématiques en vue partielle de côté d'un mode de réalisation d'une dalle de verre illustrant les principales étapes d'un mode de réalisation préféré d'un procédé conforme à l'invention,

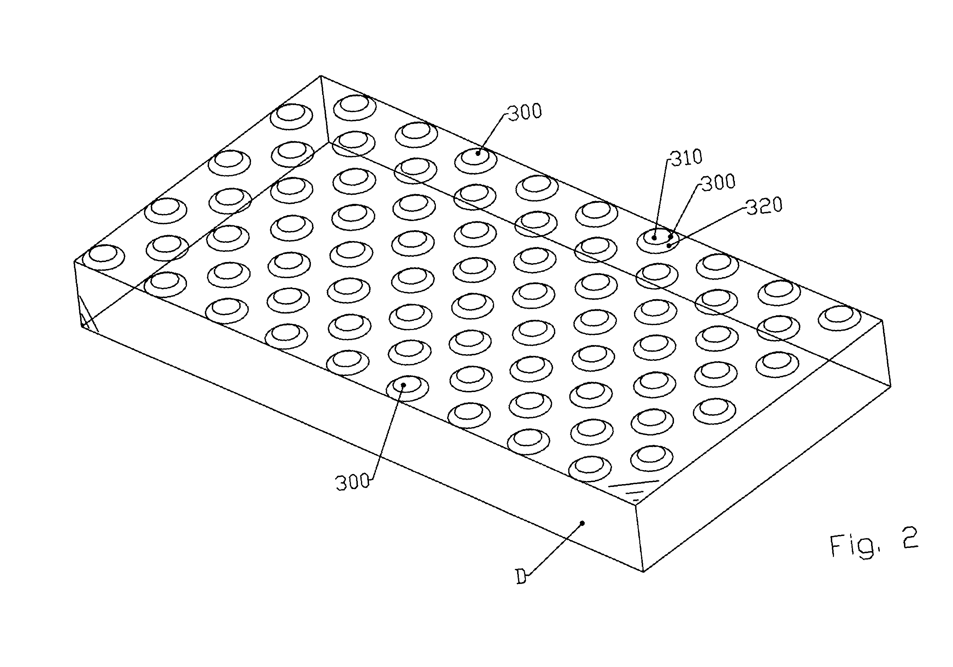

La figure 2 est un dessin schématique en vue en perspective de dessus d'un mode de réalisation d'une dalle de verre conforme à l'invention.

### DESCRIPTION DES MODES DE RÉALISATION PRÉFÉRÉS

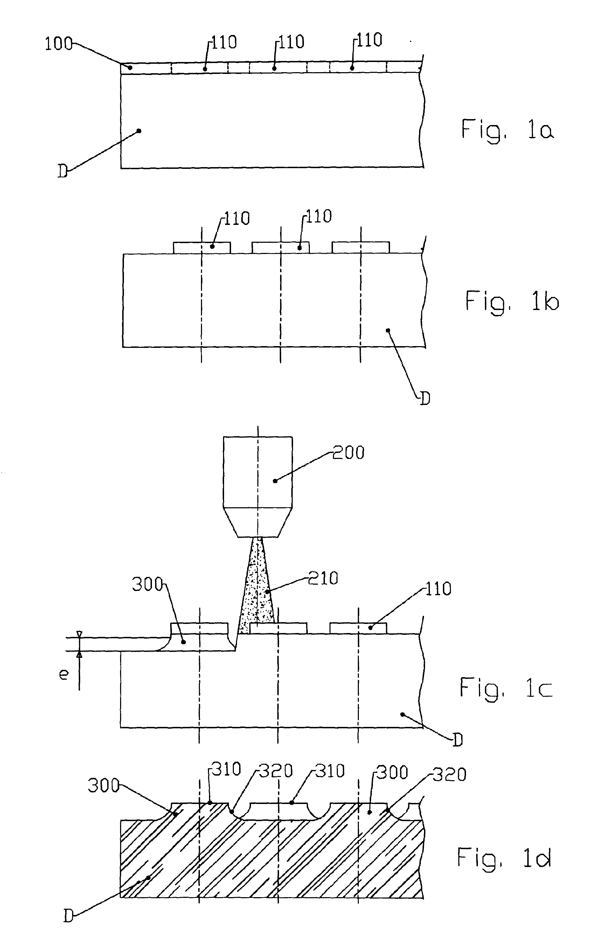

Telles qu'illustrées sur le dessin de la figure 1a, une dalle ou un panneau de verre référencé D accueille sur sa surface supérieure, une feuille référencée 100 de matériau différent ayant la fonction d'un cache. Cette feuille F adhère à la surface de la dalle D et est prédécoupée afin que, lors de son décollement, certaines parties 110 restent fixées sur la surface supérieure D comme illustrées en figure 1b.

Selon un mode de réalisation préféré, ces parties 110 restant fixées à la surface extérieure adoptent une forme circulaire et forment donc des boucliers circulaires à la projection d'éléments abrasifs illustrée par le dessin de la figure 1c.

Cette figure 1c illustre une buse 200 de projection projetant un flux d'éléments abrasifs 210 sur la surface supérieure de la dalle D. Cette projection d'éléments abrasifs a pour effet d'enlever une épaisseur "e" de matière dans la dalle D au niveau de sa surface supérieure soumise à ladite projection. Les parties de surface protégées par les parties 110 du cache se retrouvent donc en saillie par rapport au point bas de l'épaisseur "e" de matière enlevée dans la dalle D.

L'épaisseur "e" de matière enlevée dépend de plusieurs paramètres parmi lesquels le type d'éléments abrasifs projetés, la vitesse de déplacement de la tête de projection 200 par rapport à la dalle D, etc... Dans le mode de réalisation illustré, il apparaît que les disques de protection 110 formés par le cache ont permis après sablage, la mise en saillie de formes quasi-tronconiques 300.

Une fois l'opération de sablage terminée, la dalle est nettoyée et les parties 110 du cache 100 sont enlevées comme illustré en figure 1d.

A ce stade du procédé, les surfaces planes 310 des troncs de cône en saillie 300 sont lisses et les surfaces quasi-coniques 320 adoptent un état de surface dépoli c'est à dire couvert d'anfractuosités.

Conformément à l'invention, ces surfaces dépolies sont remplies et recouvertes d'un vernis permettant non seulement de le remplir mais également de rendre leur transparence à l'ensemble des surfaces dépolies autorisant ainsi l'obtention d'une dalle totalement transparente et antidérapante en présentant des saillies formées par enlèvement de matière. Ce vernis permet également de rendre leur brillance aux surfaces dépolies.

Selon une caractéristique de l'invention, un tel procédé permet d'obtenir une dalle D transparente présentant sur sa surface supérieure au moins une forme en saillie.

Selon une autre caractéristique de l'invention, un tel procédé permet d'obtenir une glace, un panneau de verre ou une dalle D transparente présentant sur sa surface supérieure une pluralité de formes en saillie disposées à intervalles réguliers.

Selon une autre caractéristique de l'invention, les formes en saillie sont identiques. En effet, il est parfaitement possible grâce à un cache adapté de présenter des formes en saillie de profils différents sans sortir du cadre de l'invention.

Selon une autre caractéristique de l'invention, les formes en saillie sont tronconiques.

Le dessin de la figure 2 illustre un mode de réalisation préféré d'une dalle D obtenue selon le procédé de l'invention et qui, totalement transparente, présente sur sa surface supérieure une pluralité de formes en saillie 300 tronconiques et identiques, disposées à intervalles réguliers.

Selon une caractéristique de l'invention non illustrée, la dalle de verre D présente une structure feuilletée dont seule la feuille supérieure dite feuille d'usure a été soumise à l'enlèvement de matière.

On comprend que le procédé et la dalle de verre, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

Ainsi par exemple, il est possible que, notamment pour des soucis esthétiques, l'ensemble des surfaces sablées ne fassent pas l'objet de l'opération de vernissage.

De même, le matériau de la dalle ou du panneau peut être constitué par des matériaux équivalents au verre comme le cristal sans pour autant sortir du cadre de l'invention.

## Revendications

1. Procédé de fabrication d'une dalle ou d'un panneau de verre (D) ou matériau équivalent, **CARACTÉRISÉ EN CE QU'**il consiste à réaliser par enlèvement de matière, au moins une forme en saillie (300) sur la surface de la dalle (D).

2. Procédé selon la revendication 1, **CARACTÉRISÉ EN CE QUE** ledit enlèvement de matière est réalisé par une opération de sablage projetant un jet de matériaux abrasifs.

3. Procédé selon la revendication 2, **CARACTÉRISÉ EN CE QU'**un cache (100) est placé sur la dalle (D) à travailler avant l'opération de sablage afin de former un obstacle à la projection abrasive et de créer des formes en saillie (300).

4. Procédé selon la revendication 1, **CARACTÉRISÉ EN CE QU'**une opération finale de vernissage remplit les anfractuosités créées par l'enlèvement de matière et rend leur transparence aux surfaces dépolies.

5. Dalle (D) de verre ou de matériau équivalent obtenue selon le procédé de la revendication 1, **CARACTÉRISÉE PAR LE FAIT QU'**elle présente sur sa surface supérieure au moins une forme en saillie (300).

6. Dalle (D) de verre ou de matériau équivalent obtenue selon le procédé de la revendication 1, **CARACTÉRISÉE PAR LE FAIT QU'**elle présente sur sa surface supérieure une pluralité de formes en saillie (300) disposées à intervalles réguliers.

7. Dalle (D) de verre ou de matériau équivalent obtenue selon le procédé de la revendication 1, **CARACTÉRISÉE PAR LE FAIT QU'**elle présente une structure feuilletée dont seule la feuille supérieure dite feuille d'usure a été soumise à l'enlèvement de matière.

8. Dalle (D) de verre selon la revendication 6, **CARACTÉRISÉE PAR LE FAIT QUE** les formes en saillie (300) sont identiques.

9. Dalle (D) de verre selon la revendication 6, **CARACTÉRISÉE PAR LE FAIT QUE** les formes en saillie (300) sont tronconiques.
